# EUROPÄISCHE PATENTSCHRIFT

(11) **EP 2 760 747 B1**
(45) Veröffentlichungstag und Bekanntmachung des Hinweises auf die Patenterteilung: **23.08.2017**
(21) Anmeldenummer: 12734943.9
(22) Anmeldetag: 11.07.2012
(51) Int. Cl.: B65C 9/06, G01N 21/90

(54) **VORRICHTUNG UND VERFAHREN ZUM AUSRICHTEN VON BEHÄLTERN**
DEVICE AND METHOD FOR ALIGNING CONTAINERS
DISPOSITIF ET PROCÉDÉ D'ORIENTATION DE CONTENANTS

(30) Priorität: 26.09.2011 DE 102011083377
(43) Veröffentlichungstag der Anmeldung: 06.08.2014
(73) Patentinhaber: Krones AG, 93073 Neutraubling (DE)
(72) Erfinder: KOLB, Herbert, 93073 Neutraubling (DE)
(74) Vertreter: Grünecker Patent- und Rechtsanwälte PartG mbB
(86) Internationale Anmeldenummer: PCT/EP2012/063584
(87) Internationale Veröffentlichungsnummer: WO 2013/045131

(56) Entgegenhaltungen:
- EP-A1- 0 491 555
- WO-A1-2009/072157
- WO-A2-2008/072070
- DE-A1-102005 041 497
- DE-A1-102009 020 919

## Beschreibung

Die Erfindung betrifft eine Vorrichtung zum Ausrichten von Behältern nach dem Oberbegriff des Anspruchs 1, wie aus der DE 10 2005 041497 A bekannt, ein entsprechendes Verfahren zum Ausrichten von Behältern, eine Etikettiermaschine und ein Etikettierverfahren.

Vor dem Etikettieren von Behältern, wie beispielsweise Getränkeflaschen, werden diese üblicherweise in eine geeignete Soll-Drehlage bezüglich der jeweiligen Etikettiervorrichtung gebracht. Dazu ist es beispielsweise aus der DE 10 2005 050 902 A1 und der DE 10 2009 020 919 A1 bekannt, die Behälter während der Drehung um ihre Hauptachse an einem Kamerasystem entlang zu führen, um die Behälter in mehreren Kamerabildern voll umfänglich abzubilden und ein Merkmal auf der Behälteroberfläche, beispielsweise eine Pressnaht, zu identifizieren. Die Ist-Drehlage des Behälters wird anhand des identifizierten Merkmals ermittelt und eine Soll-Drehlage als Ausgangspunkt für die Etikettierung angefahren.

Hierbei treten jedoch die folgenden Probleme auf:
1. Bei vergleichsweise kleinen Merkmalen, wie beispielsweise einer Pressnaht auf der Oberfläche des Behälters, verursachen die Konturen der Merkmale im reflektierten Auflicht nur vergleichsweise schwache Kontrastunterschiede. Es ist dann gerade in einer im Wesentlichen frontalen Ansicht eines nur schwach konturierten Merkmals unter Umständen keine exakte Positionsbestimmung des Merkmals möglich. Entsprechend lässt sich die Ist-Drehlage des Behälters anhand des Merkmals nicht oder nur mit unzureichender Genauigkeit ermitteln.
2. Konturen erhabener Merkmale werden in verschiedenen Drehlagen, also unter verschiedenen Objektwinkeln, mit unterschiedlichen Kontrastunterschieden und/oder Kantenbreiten dargestellt. Auch dies kann dazu führen, dass sich die Position und/oder Drehlage eines reliefartigen Merkmals auf der Behälteroberfläche nur mit unzureichender Genauigkeit oder Zuverlässigkeit bestimmen lässt.
3. In den Bereichen der zu identifizierenden Merkmale kann der Behälterdurchmesser herstellungsbedingt mit einer für die Positionsbestimmung relevanten Toleranz behaftet sein. Je nach Maßhaltigkeit des zu untersuchenden Behälters kann dann eine vom Objektwinkel abhängige Ungenauigkeit der Positionsbestimmung oder der Drehlagenbestimmung des identifizierten Merkmals die Folge sein. Somit lässt sich unter Umständen kein korrekter Korrekturwinkel zum Anfahren einer Soll-Drehlage für die nachfolgende Etikettierung berechnen.

Wie in der DE 10 2005 050 902 A1 vorgeschlagen wird, kann dem letztgenannten Problem dadurch begegnet werden, indem die Behälter in aufeinander folgenden Inspektionseinheiten mit zunehmender Genauigkeit ausgerichtet werden. Neben dem erheblichen apparativen und zeitlichen Aufwand können die unter den Punkten 1 und 2 genannten Probleme dadurch jedoch nicht gelöst oder sogar noch verschlimmert werden.

Es besteht somit der Bedarf für in dieser Hinsicht verbesserte Vorrichtungen und Verfahren zum Ausrichten von Behältern, insbesondere für eine nachfolgende Etikettierung der Behälter.

Die gestellte Aufgabe wird mit einer Vorrichtung zum Ausrichten von Behältern nach Anspruch 1 gelöst. Demnach ist diese für eine jeweils vollumfängliche Abbildung des Behälters unter unterschiedlichen Objektwinkeln ausgebildet und eine Auswerteeinheit vorgesehen, die die Position und/oder Drehlage wenigstens eines Merkmals auf der Oberfläche des auszurichtenden Behälters durch Verrechnen von Bilddaten des Merkmals in wenigstens zwei Ansichten ermittelt, die sich bezüglich der jeweils abgebildeten Drehlage der Behälter unterscheiden.

Dadurch lässt sich beispielsweise die Position und/oder Drehlage eines in einer einzelnen Ansicht nur unzuverlässig erkennbaren Merkmals anhand einer zweiten Ansicht bestätigen und/oder korrigieren. Ebenso können vom jeweiligen Objektwinkel abhängige Verzerrungen und/oder Kontrastunterschiede charakteristischer reliefartiger Strukturen in wenigstens zwei einander entsprechenden Bildbereichen der wenigstens zwei Ansichten miteinander verglichen und/oder verrechnet werden. Dies ermöglicht beispielsweise eine Mittelung der einander entsprechenden Bilddaten, eine Subtraktion oder Addition und dergleichen. Insbesondere ist eine Interpolation von Bilddaten aus den wenigstens zwei unterschiedlichen Ansichten der Behälteroberfläche möglich.

Anders gesagt, werden reliefartige Merkmale aus unterschiedlichen Blickwinkeln abgebildet, um aus den unterschiedlichen Ansichten Information darüber zu erhalten, in welchem Maß die Kontrastunterschiede, Kantenbreiten bestimmter Konturen vom Objektwinkel abhängen. Aus dieser Information kann eine korrigierte Abbildung für die Bildauswertung und Positionsbestimmung erzeugt werden. Besonders vorteilhaft zum Erzeugen korrigierter Abbildungen ist die Interpolation der unterschiedlichen Ansichten, beispielsweise die bilineare Interpolation, bikubische Interpolation, Nearest-Neighbour-Interpolation oder Lanczos-Interpolation.

Vorzugsweise sind die Kameras derart angeordnet, dass sich Objektwinkel einander entsprechender Bereiche des Merkmals in wenigstens zwei Ansichten um wenigstens 30° voneinander unterscheiden, insbesondere um wenigstens 45°. Der Objektwinkel ist hierbei definitionsgemäß der Winkel des Objekts relativ zur optischen Achse des Kameraobjektivs, also ein Maß für die Sehrichtung oder Blickrichtung des Kameraobjektivs bezüglich des zu vermessenden Objekts. Unter einander entsprechenden Bereichen des Merkmals sind hierbei beispielsweise charakteristische Kanten und andere charakteristische Erhebungen und/oder Vertiefungen zu verstehen. Bei den oben genannten Objektwinkeldifferenzen erzeugen reliefartige Strukturen mit vergleichsweise großer Wahrscheinlichkeit unterschiedliche Schattenwürfe, Reflexionen und dergleichen in den aufgenommenen Kamerabildern. Man erhält somit für einzelne Merkmale wenigstens zwei unterschiedliche Bilddatensätze, die sich miteinander vergleichen und/oder verrechnen lassen.

Bei einer besonders günstigen Ausführungsform der erfindungsgemäßen Vorrichtung ist die Auswerteeinheit derart ausgebildet, dass sie aus den Bilddaten der wenigstens zwei Ansichten eine virtuelle Ansicht des Behälters erzeugen kann. Es kann somit eine idealisierte Abbildung des Behälters mit reduzierten Abbildungsfehlern berechnet werden. Dadurch lässt sich die Position und/oder Drehlage von Merkmalen auf der Oberfläche des Behälters mit größerer Genauigkeit und Zuverlässigkeit bestimmen. Hierbei können auch mehrere virtuelle Ansichten zu einer Panoramaansicht des Behälters kombiniert werden.

Vorzugsweise weisen die Kameras wenigstens einen entlang der Förderstrecke überlappenden Bildbereich auf, um das Merkmal in dem überlappenden Bildbereich aus unterschiedlichen Objektwinkeln abzubilden. Es ist dann möglich, den Behälter mit mehreren Kameras gleichzeitig in dem überlappenden Bildbereich abzubilden, um Bilddatensätze zu erhalten, die sich in erfindungsgemäßer Weise verrechnen lassen. Dadurch lässt sich der für die Drehlagenbestimmung und die Behälterausrichtung benötigte Maschinenwinkel reduzieren.

Vorzugsweise sind mehrere überlappende Bildbereiche entlang der Förderstrecke vorgesehen, um den Behälter in den überlappenden Bildbereichen insgesamt voll umfänglich abzubilden. Dadurch kann eine voll umfängliche Identifizierung geeigneter Merkmale auf der Oberfläche des Behälters und eine Ermittlung einer Ist-Drehlage des Behälters auf Grundlage eines Vergleichs mehrerer Ansichten unter unterschiedlichen Objektwinkeln in einer einzigen Inspektions- und Ausrichteinheit durchgeführt werden. Es wird damit insbesondere eine aus dem Stand der Technik bekannte mehrstufig sequentielle Ausrichtung mit separaten Kamerasystemen entbehrlich.

Eine besonders günstige Ausführungsform der erfindungsgemäßen Vorrichtung umfasst ferner eine insbesonders gerichtete Beleuchtungseinrichtung zum Belichten der Behälter, die derart ausgerichtet ist, dass sie an den Merkmalen in den wenigstens zwei Ansichten unterschiedliche Schattenwürfe und/oder Reflektionsmuster erzeugen kann. Dadurch lassen sich auch kontrastarme Merkmale, wie beispielsweise nur geringfügig erhabene und/oder vertiefte Strukturen, beispielsweise Pressnähte, mit erhöhter Zuverlässigkeit identifizieren und lokalisieren.

Vorzugsweise umfasst die erfindungsgemäße Vorrichtung eine Steuereinheit zum Ausrichten der Drehlage der Behälter anhand der ermittelten Position und/oder Drehlage des Merkmals. Somit kann eine erfindungsgemäß mit erhöhter Genauigkeit und Zuverlässigkeit ermittelte Ist-Drehlage des Behälters unmittelbar als Ausgangswert für eine nachfolgende Korrektur der Drehlage verwendet werden. Insbesondere ist ein unmittelbar anschließender Etikettierschritt auf Grundlage der korrigierten Drehlage der Behälter möglich.

Die gestellte Aufgabe wird ferner mit einer Etikettiermaschine gelöst, die die erfindungsgemäße Vorrichtung zum Ausrichten von Behältern umfasst. Da Etiketten üblicherweise nicht auf erhabenen oder vertieften Bereichen von Behältern angebracht werden sollen, lässt sich die erfindungsgemäße Vorrichtung zum Ausrichten von Behältern in besonders vorteilhafter Weise vor einem unmittelbar anschließenden Etikettieren einsetzen.

Die gestellte Aufgabe wird ferner mit einem Verfahren nach Anspruch 9 gelöst. Demnach umfasst dieses die Schritte: a) Fördern und Drehen der Behälter; b) Jeweils vollumfängliches Abbilden der Behälter aus wenigstens zwei unterschiedlichen Kamerapositionen unter unterschiedlichen Objektwinkeln, um einen umfänglichen Bereich der Behälter jeweils in wenigstens zwei Ansichten abzubilden; und c) Ermitteln der Position und/oder Drehlage wenigstens eines Merkmals der Oberfläche des Behälters mittels Verrechnen von Bilddaten des Merkmals in den wenigstens zwei Ansichten. Dadurch, dass charakteristische Merkmale in unterschiedlichen Ansichten abgebildet werden, können die in den unterschiedlichen Ansichten mit entsprechend unterschiedlicher Kontrastierung und/oder Kantenbreite dargestellten Merkmale miteinander verglichen und/oder verrechnet werden. Dadurch lässt sich beispielsweise vermeiden, dass ein Merkmal in einer bestimmen Ansicht nicht oder nur mit einem zu geringen Kontrast, also mit zu geringer Zuverlässigkeit, identifiziert werden kann. Ebenso lässt sich die Plausibilität einzelner Messungen überprüfen.

Vorzugsweise werden im Schritt c) Bilddaten der wenigstens zwei Ansichten interpoliert und/oder addiert. Dadurch können beispielsweise Abbildungsfehler einzelner Ansichten gemittelt und/oder gewichtet korrigiert werden. Beispielsweise kann eine Interpolation je nach Qualität des zu identifizierenden Merkmals in einer bestimmten Ansicht vorrangig auf Grundlage einer qualitativ bevorzugten Ansicht berechnet werden.

Bei einer besonders günstigen Ausführungsform des erfindungsgemäßen Verfahrens wird im Schritt c) eine virtuelle Ansicht des Behälters aus den Bilddaten der wenigstens zwei Ansichten erzeugt. Dadurch kann eine für die Auswertung der Position des Merkmals besonders günstige Ansicht berechnet werden. Hierbei ist unter Ansicht eine Transformation in einen für die Weiterverarbeitung der Bilddaten günstigen Blinkwinkel zu verstehen. Da die Kamerapositionen und die Objektposition des Behälters bei der Aufnahme als bekannt vorausgesetzt werden können, lassen sich auch mehrere virtuelle Ansichten berechnen, vergleichen und/oder kombinieren.

Vorzugsweise weisen die wenigstens zwei Ansichten des Merkmals einen überlappenden Bildbereich auf und werden im Wesentlichen gleichzeitig abgebildet. Dadurch können die wenigstens zwei Ansichten besonders zeitsparend und platzsparend innerhalb der überlappenden Bildbereiche abgebildet werden. Durch gleichzeitiges Abbilden der Behälter können Messfehler weiter reduziert werden.

Eine besonders günstige Ausführungsform des erfindungsgemäßen Verfahrens umfasst ferner einen Schritt d) des Ermittelns einer Ist-Drehlage der Behälter anhand der im Schritt c) ermittelten Position und/oder Drehlage des wenigstens einen Merkmals, und des Ermittelns einer Drehlagenkorrektur zum Anfahren einer Soll-Drehlage des Behälters. Dadurch lässt sich der Fehler zum Anfahren einer Soll-Drehlage minimieren.

Vorzugsweise umfasst das erfindungsgemäße Verfahren ferner einen Schritt e) des Anfahrens der Soll-Drehlage. Dadurch lässt sich das erfindungsgemäße Verfahren besonders effizient für eine unmittelbar nachfolgende Etikettierung verwenden.

Die gestellte Aufgabe wird ferner gelöst mit einem Etikettierverfahren, welches das erfindungsgemäße Verfahren zum Ausrichten von Behältern umfasst sowie einen Schritt des Etikettierens der Behälter, wobei die angefahrene Soll-Drehlage eine Startposition und/oder eine Referenzposition für das Etikettieren ist. Dies ermöglicht eine besonders platzsparende und genaue Etikettierung unter Vermeidung eines Aufbringens der Etiketten auf Bereichen mit erhabenen und/oder vertieften Oberflächenbereichen.

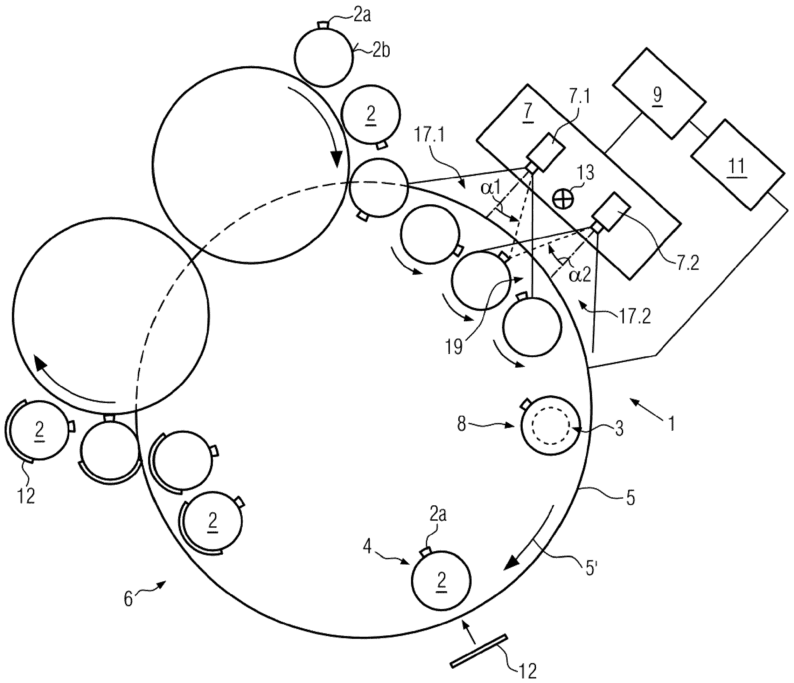

Eine bevorzugte Ausführungsform der Erfindung ist in der Zeichnung dargestellt.

Wie die einzige Figur in der schematischen Draufsicht erkennen lässt, umfasst eine bevorzugte Ausführungsform der erfindungsgemäßen Vorrichtung 1 zum Ausrichten von Behältern 2, wie beispielsweise Getränkeflaschen oder dergleichen, mehrere drehbare Haltevorrichtungen 3 zum Aufnehmen, Halten und Ausrichten der Behälter 2 in eine Soll-Drehlage 4 für einen nachfolgenden Behandlungsschritt, insbesondere für eine Etikettierung der Behälter 2. Die Haltevorrichtungen 3 umfassen beispielsweise Drehteller oder dergleichen, die in der Figur jeweils von den Behältern 2 verdeckt sind. Die Behälter 2 laufen entlang einer Förderstrecke 5, die beispielsweise Bestandteil einer karussellförmigen Etikettiervorrichtung 6 sein kann, an einem im Wesentlichen tangential zur Förderstrecke 5 ausgerichteten Kamerasystem 7 entlang. Die Behälter 2 werden dabei um ihre Hauptachse gedreht und in unterschiedlichen Drehlagen vorzugsweise vollumfänglich abgebildet. Aus Bilddaten des Kamerasystems 7 können die jeweiligen Ist-Drehlagen 8 der Behälter 2 mittels einer Auswerteeinheit 9 berechnet werden, ebenso individuelle Korrekturwinkel zum Anfahren der für alle Behälter 2 identischen Soll-Drehlage 4. In der Figur sind nur einzelne, zum Verständnis der Erfindung beitragende Behälterpositionen entlang der Fördestrecke 5 angedeutet.

Das Kamerasystem 7 umfasst wenigstens zwei Kameras 7.1 und 7.2, die entlang der Förderstrecke 5, also bezüglich der durch einen Pfeil 5' symbolisierten Transportrichtung der Behälter 2 hintereinander liegend, angeordnet sind. Ergänzend zur Auswerteeinheit 9 zum Verarbeiten von Bilddaten der Kameras 7.1 und 7.2 ist eine Steuereinheit 11 vorgesehen, um die einzelnen Haltevorrichtungen 3 von der jeweiligen Ist-Drehlage 8 gezielt in die Soll-Drehlage 4 zu drehen. Unterschiedliche Drehlagen der Behälter lassen sich in der Figur beispielsweise anhand eines charakteristischen reliefartigen Merkmals 2a erkennen, das auf der Behälteroberfläche 2b vorgesehen ist, beispielsweise in Form einer Pressnaht.

Die Funktionsweise des Kamerasystems 7 und der Auswerteeinheit 9 wird beispielhaft nur anhand der beiden abgebildeten Kameras 7.1 und 7.2 beschrieben. Vorzugsweise umfasst das Kamerasystem 7 jedoch weitere Kameras, wobei dann jeweils benachbarte Kameras in der gleichen Weise zusammenwirken, wie dies nachfolgend für die beiden Kameras 7.1 und 7.2 beschrieben wird.

Die reliefartig strukturierten Merkmale 2a können sowohl Erhebungen als auch Vertiefungen umfassen. Aufgabe der erfindungsgemäßen Vorrichtung 1 ist es insbesondere, charakteristische Konturen, Kanten und dergleichen der Merkmale 2a zuverlässig zu erkennen und anhand der Bilddaten der Kameras 7.1, 7.2 zu lokalisieren, um aus Positionsdaten der Merkmale 2a die Ist-Drehlage 8 bezüglich der Transportstrecke 5 zu ermitteln. Für eine nachfolgende Etikettierung der Behälter 2 mit Etiketten 12, die beispielhaft in der Figur angedeutet ist, sind die Behälter 2 in die vorgegebene Soll-Drehlage 4 zu fahren, die vorzugsweise eine Ausgangsposition für die Etikettierung der Behälter 2 ist.

Im Bereich des Kamerasystems 7 ist eine Beleuchtungseinrichtung 13 vorgesehen, beispielsweise eine Reihe von Leuchtdioden oder dergleichen. Die Beleuchtungseinrichtung 13 erzeugt auf den Behältern 2 einen charakteristischen Reflex, beispielsweise einen hellen Streifen, der von den Kameras 7.1 und 7.2 unter unterschiedlichen Objektwinkeln bezüglich der jeweiligen Objektivmittelachse abgebildet wird. Das Abstrahlverhalten der Beleuchtungseinrichtung 13 ist derart ausgebildet, dass an den Merkmalen 2a, insbesondere an Kanten, Konturen und dergleichen, je nach Objektwinkel α1, α2 der betreffenden Struktur, unterschiedliche Kontrastverläufe in Form von Reflexionen und/oder Schattenwürfen erzeugt werden. Somit wird ein und dieselbe Oberflächenstruktur, hier beispielhaft das Merkmal 2a, in den Kamerabildern der Kameras 7.1 und 7.2 mit unterschiedlichen Helligkeitsverläufen, Kantenbreiten, perspektivischen Verzerrungen und dergleichen abgebildet. Anders gesagt werden die Behälter 2 von den Kameras 7.1 und 7.2 in unterschiedlichen Drehlagen gesehen und dabei ein und dasselbe Merkmal 2a unter unterschiedlichen Objektwinkeln α1, α2 in wenigstens zwei Kamerabildern abgebildet.

Je nach Relativposition und Ausrichtung der Merkmale 2a bezüglich der Kameras 7.1 und 7.2 sowie der Beleuchtungseinrichtung 13 werden von den Kameras 7.1 und 7.2 somit unterschiedliche Bilddaten ein und desselben Merkmals 2a erzeugt. Die einander entsprechenden Ansichten der Behälteroberfläche 2b und der Merkmale 2a werden von den Kameras 7.1 und 7.2 vorzugsweise gleichzeitig aufgenommen. Dies erleichtert die Synchronisierung und die zeitliche Zuordnung der einzelnen Kamerabilder und die Zuordnung von Positionsdaten, wie beispielsweise Weltkoordinaten der Behälteroberfläche, zu den Bilddaten der Kameras 7.1 und 7.2. Eine gemeinsame Triggerung der Kameras 7.1 und 7.2, also ein gemeinsames Auslösen, ist jedoch nicht zwingend notwendig.

Die jeweils symbolisch durch Randstrahlen angedeuteten Bildbereiche 17.1 und 17.2 der Kameras 7.1 und 7.2 überlappen in Transportrichtung der Behälter 2 in einem Überlappungsbereich 19. Das Merkmal 2a der Behälteroberfläche 2b wird von den Kameras 7.1 und 7.2 vorzugsweise abgebildet, solange sich das Merkmal 2a in dem überlappenden Bildbereich 19 befindet. Der Überlappungsbereich 19 ist allerdings nicht zwingend notwendig. Da sowohl die Position der Behälter 2 entlang der Förderstrecke 5 als auch die Drehlagen der zugeordneten Halteeinrichtung 3 beispielsweise mittels geeigneter Inkrementgeber bekannt sind, könnte eine Abbildung des Behälters 2 zu beliebigen Zeitpunkten erfolgen, solange gewährleistet ist, dass ein bestimmtes Merkmal 2a auf der Behälteroberfläche 2b wenigstens von zwei Kameras 7.1 und 7.2 unter unterschiedlichen Objektwinkeln α1, α2 abgebildet wird. Anders gesagt, sind beliebige Kombinationen derart unterschiedlicher Ansichten des Merkmals 2a denkbar. Erfindungsgemäß ist eine jeweils vollumfängliche Abbildung des Behälters 2 unter unterschiedlichen Objektwinkeln gewährleistet.

Um Ansichten mit ausreichend unterschiedlicher Kontrastwirkung der Merkmale 2a zu erhalten, sind die Kameras 7.1 und 7.2 mit ausreichendem Abstand zueinander, gemessen entlang der Transportstrecke 5, vorzusehen. Dadurch wird gewährleistet, dass die Differenz zwischen den Objektwinkeln α1, α2 der Kameras 7.1, 7.2 ausreichend groß ist. Vorzugsweise beträgt die Differenz zwischen den Objektwinkeln α1 und α2, die in der Draufsicht mit der jeweiligen optischen Achse der Kameras 7.1 und 7.2 eingeschlossen werden, wenigstens 30°, insbesondere wenigstens 45°. Im gezeigten Beispiel haben die Objektwinkeln α1, α2 unterschiedliche Vorzeichen, so dass sich die die Objektwinkel α1, α2 bei der Differenzbildung dem Betrag nach addieren. Die von den Kameras 7.1 und 7.2 aufgenommenen, unterschiedlichen Ansichten der Behälter 2 werden von der Auswerteeinheit 9 vorzugsweise zu einer virtuellen Ansicht des Behälters 2 kombiniert. Grundlage für eine derartige Umrechnung kann beispielsweise eine Interpolation, eine Differenzbildung oder eine Summierung einzelner Ansichten der Kameras 7.1 und 7.2 sein. Geeignete Verfahren umfassen beispielsweise eine bilineare oder bikubische Interpolation oder auch eine Interpolation nach dem Nearest-Neighbour-Verfahren. Es lassen sich sowohl bei großen Objektwinkeln auftretende abbildungsbedingte Verzerrungen kompensieren als auch zu geringe Kontrastunterschiede an erhabenen oder vertieften Strukturen, die in erster Linie bei vergleichsweise kleinen Objektwinkeln auftreten, in wenigstens einer abgebildeten Ansicht des Merkmals 2a vermeiden. Die unterschiedlichen Kamerabilder des Merkmals 2a können auch dazu genutzt werden, die Zuverlässigkeit einer Merkmalsidentifizierung im Sinne einer Plausibilitätsprüfung zu verbessern.

Unterschiedliche perspektivische Verzerrungen von Konturen können durch Interpolation einzelner Ansichten des Merkmals 2a zumindest teilweise ausgeglichen werden. Dadurch lässt sich die Genauigkeit der Positionsbestimmung charakteristischer Kanten und dergleichen an erhabenen oder vertieften Strukturen verbessern. Hierbei kann beispielsweise auch durch Interpolation eine virtuelle Ansicht der Behälteroberfläche 2b erzeugt werden, die hinsichtlich einer verbesserten Erkennbarkeit und Lokalisierung des Merkmals 2a optimiert ist.

Toleranzen der Behälterabmessungen lassen sich dadurch berücksichtigen, dass Positionen und/oder Drehlagen des Merkmals 2a in den einzelnen Ansichten der Kameras 7.1 und 7.2 mit Wertetabellen oder dergleichen verglichen werden. Beispielsweise sind bei einer vorgegebenen Behälterabmessung nur bestimmte Positionen von Merkmalen 2a auf einer beispielsweise zylindrischen Behälteroberfläche 2b möglich. Es lässt sich daher durch einen Vergleich mit Wertetabellen feststellen, ob ein aus einander zugehörigen unterschiedlichen Ansichten des Merkmals 2a ermittelte Wertepaare oder Wertegruppen mit einer Wertetabelle eines bestimmten vorgegebenen Behälterdurchmessers oder dergleichen übereinstimmt.

Mit der erfindungsgemäßen Vorrichtung 1 kann beispielsweise ein kontinuierlicher Strom aus auszurichtenden und zu etikettierenden Behältern 2 unter unterschiedlichen Objektwinkeln α1 und α2 von wenigstens zwei Kameras 7.1 und 7.2 abgebildet werden, um aus den einander entsprechenden Abbildungen eine Position eines Merkmals 2a mit erhöhter Genauigkeit zu bestimmen. Hierzu werden die Behälter 2 vorzugsweise kontinuierlich entlang der Förderstrecke 5 an dem Kamerasystem unter kontinuierlicher Drehung der Behälter 2 um ihre Hauptachse vorbeibewegt. Es werden dann vorzugsweise so viele Aufnahmen von den Behältern 2 gemacht, dass diese in den Aufnahmen wenigstens voll umfänglich abgebildet sind. Dadurch wird gewährleistet, dass das Merkmal 2a auch bei einer zufälligen Verteilung der ursprünglichen Behälterdrehlagen in wenigstens in zwei erfindungsgemäßen Aufnahmen des Behälters 2 abgebildet wird.

Hierbei wird vorausgesetzt, dass das Auslösen einzelner Kamerabilder der Kameras 7.1 und 7.2 sowohl mit dem Transport des Behälters 2 entlang der Förderstrecke 5, als auch mit der Drehbewegung der zugeordneten Haltevorrichtung 3 synchronisiert ist. Dies kann in bekannter Weise durch Servomotoren und dergleichen sichergestellt werden. Ferner wird eine Synchronisation der Bildkoordinaten in den einzelnen Kamerabildern mit den Weltkoordinaten der Behälter 2 und der Kameras 7.1 und 7.2 gewährleistet, beispielsweise in bekannter Weise mit Testkörpern, durch das Einlernen von Auswertealgorithmen und/oder Berücksichtigung der intrinsischen Kameraparameter. Hierfür können Standardverfahren der Photogrammetrie eingesetzt werden.

Die Erfindung wurde anhand eines einzelnen Merkmals 2a auf der Behälteroberfläche 2b und unter Verwendung von lediglich zwei Kameras 7.1, 7.2 beschrieben, deren Bildbereiche 17.1 und 17.2 in einem gemeinsamen Überlappungsbereich 19 unterschiedliche Ansichten zu identifizierender Merkmale 2a bereitstellen. Es könnte jedoch eine beliebige Anzahl von Merkmalen 2a innerhalb eines Überlappungsbereichs 19 untersucht werden. Ebenso könnten mehrere Überlappungsbereiche 19 in Transportrichtung der Behälter 2 hintereinander liegend angeordnet sein. In diesem Fall müsste eine entsprechende Anzahl Kameras vorgesehen sein.

Anhand wenigstens eines identifizierten Merkmals 2a wird eine Ist-Drehlage 8 der Behälter 2 bezüglich der Förderstrecke 5 und/oder bezüglich eines nachfolgenden Etikettieraggregats berechnet. Die berechnete Ist-Drehlage 8 wird vorzugsweise unmittelbar im Anschluss korrigiert, indem eine Differenz zu einer vorgegebenen Soll-Drehlage 4, insbesondere für eine Etikettierung, berechnet wird und indem die Soll-Drehlage 4 angefahren wird. Die Soll-Drehlage 4 wird dann vorzugsweise als Startposition und/oder als Referenzposition für eine unmittelbar nachfolgende Etikettierung verwendet. Dadurch entfallen Zwischenschritte, wie beispielsweise eine Feinausrichtung der Behälter 2 vor der Etikettierung. Somit lässt sich die erfindungsgemäße Vorrichtung 1 zum Ausrichten von Behältern in besonders günstiger Weise in eine Etikettiermaschine 6 integrieren.

## Patentansprüche

1. Vorrichtung zum Ausrichten von Behältern (2), mit:
- drehbaren Haltevorrichtungen (3) zum Halten und individuellen Drehen der Behälter;
- wenigstens zwei entlang einer Förderstrecke (5) für die Behälter vorgesehenen Kameras (7.1, 7.2) zum Abbilden der Behälter in mehreren Ansichten, die sich bezüglich der abgebildeten Drehlage der Behälter unterscheiden; und
- einer Auswerteeinheit (9) zum Bestimmen der Lage von Merkmalen auf der Oberfläche (2b) der Behälter anhand der Ansichten,
**dadurch gekennzeichnet, dass**
die Vorrichtung für eine jeweils vollumfängliche Abbildung des Behälters (2) unter unterschiedlichen Objektwinkeln (α1, α2) ausgebildet ist, und die Auswerteeinheit derart ausgebildet ist, dass sie die Position und/oder Drehlage wenigstens eines Merkmals (2a) der Oberfläche (2b) des Behälters durch Verrechnen von Bilddaten des Merkmals in wenigstens zwei der Ansichten ermittelt.

2. Vorrichtung nach Anspruch 1, wobei die Kameras (7.1, 7.2) derart angeordnet sind, dass sich Objektwinkel (α1, α2) einander in den wenigstens zwei Ansichten entsprechender Bereiche des Merkmals (2a) um wenigstens 30° voneinander unterscheiden, insbesondere um wenigstens 45°.

3. Vorrichtung nach Anspruch 1 oder 2, wobei die Auswerteeinheit (9) derart ausgebildet ist, dass sie aus den Bilddaten der wenigstens zwei Ansichten eine virtuelle Ansicht des Behälters (2) erzeugen kann.

4. Vorrichtung nach wenigstens einem der vorigen Ansprüche, wobei die Kameras (7.1, 7.2) wenigstens einen entlang der Förderstrecke (5) überlappenden Bildbereich (19) aufweisen, um das Merkmal (2a) in dem überlappenden Bildbereich unter unterschiedlichen Objektwinkeln (α1, α2) abzubilden.

5. Vorrichtung nach Anspruch 4, wobei mehrere überlappende Bildbereiche (19) entlang der Förderstrecke (5) vorgesehen sind, um den Behälter (2) in den überlappenden Bildbereichen vollumfänglich abzubilden.

6. Vorrichtung nach wenigstens einem der vorigen Ansprüche, ferner mit einer insbesondere gerichteten Beleuchtungseinrichtung (13) zum Belichten der Behälter (2) derart, dass sie an dem Merkmal (2a) in den wenigstens zwei Ansichten unterschiedliche Schattenwürfe und/oder Reflexionsmuster erzeugen kann.

7. Vorrichtung nach wenigstens einem der vorigen Ansprüche, ferner mit einer Steuereinheit (11) zum Ausrichten der Drehlage der Behälter (2) anhand der ermittelten Position und/oder Drehlage des Merkmals (2a).

8. Etikettiermaschine mit der Vorrichtung nach wenigstens einem der vorigen Ansprüche.

9. Verfahren zum Ausrichten von Behältern (2), mit folgenden Schritten:
a) Fördern und Drehen der Behälter;
b) Jeweils vollumfängliches Abbilden der Behälter aus wenigstens zwei unterschiedlichen Kamerapositionen unter unterschiedlichen Objektwinkeln (α1, α2), um einen umfänglichen Bereich der Behälter jeweils in wenigstens zwei Ansichten abzubilden, die sich bezüglich der abgebildeten Drehlage des jeweiligen Behälters unterscheiden; und
c) Ermitteln der Position und/oder Drehlage wenigstens eines Merkmals (2a) der Oberfläche (2b) des Behälters mittels Verrechnen von Bilddaten des Merkmals in den wenigstens zwei Ansichten.

10. Verfahren nach Anspruch 9, wobei im Schritt c) Bilddaten der wenigstens zwei Ansichten interpoliert und/oder addiert werden.

11. Verfahren nach Anspruch 9 oder 10, wobei im Schritt c) eine virtuelle Ansicht des Behälters (2) aus den Bilddaten der wenigstens zwei Ansichten erzeugt wird.

12. Verfahren nach wenigstens einem der Ansprüche 9 bis 11, wobei die wenigstens zwei Ansichten einen überlappenden Bildbereich (19) aufweisen und im Wesentlichen gleichzeitig abgebildet werden.

13. Verfahren nach wenigstens einem der Ansprüche 9 bis 12, ferner mit einem Schritt d) des Ermittelns einer Ist-Drehlage (8) der Behälter (2) anhand der im Schritt c) ermittelten Position und/oder Drehlage des wenigstens einen Merkmals (2a), und des Ermittelns einer Drehlagenkorrektur zum Anfahren einer Soll-Drehlage (4) des Behälters.

14. Verfahren nach Anspruch 13, ferner mit einem Schritt e) des Anfahrens der Soll-Drehlage (4).

15. Etikettierverfahren, das das Verfahren nach Anspruch 14 umfasst sowie einen Schritt des Etikettierens der Behälter (2), wobei die angefahrene Soll-Drehlage (4) eine Startposition und/oder Referenzposition für das Etikettieren ist.

## Claims

1. Device for aligning containers (2), comprising:
- rotatable holding devices (3) for holding and individually rotating the containers;
- at least two cameras (7.1, 7.2) provided along a conveying path (5) for the containers for imaging the containers in plural views that differ with respect to the imaged rotational position of the containers; and
- an evaluation unit (9) for determining the position of features on the surface (2b) of the containers on the basis of the views,
**characterized in that**
the device is designed for a respective full-circumference imaging of the container (2) under different object angles (α1, α2), and the evaluation unit is designed such that it determines
the position and/or rotational position of at least one feature (2a) of the surface (2b) of the container by computing image data of the feature in at least two of the views.

2. Device according to claim 1, wherein the cameras (7.1, 7.2) are arranged such that object angles (α1, α2) of correlating areas of the feature (2a) in the at least two views differ from each other by at least 30°, particularly by at least 45°.

3. Device according to claim 1 or 2, wherein the evaluation unit (9) is configured such that it can produce a virtual view of the container (2) from the image data of the at least two views.

4. Device according to at least one of the preceding claims, wherein the cameras (7.1, 7.2) comprise at least an image area (1) overlapping along the conveying path (5) to image the feature (2a) in the overlapping image area under different object angles (α1, α2).

5. Device according to claim 4, wherein a plurality of overlapping image areas (1) are provided along the conveying path (5) to image the container (2) in the overlapping image areas over the full circumference.

6. Device according to at least one of the preceding claims, further comprising a particularly directed illuminating device (13) for lighting the containers (2) such that it can produce different shadow castings and/or reflection patterns on the feature (2a) in the at least two views.

7. Device according to at least one of the preceding claims, further comprising a control unit (11) for aligning the rotational position of the containers (2) on the basis of the determined position and/or rotational position of the feature (2a).

8. Labeling machine comprising the device according to at least one of the preceding claims.

9. Method for aligning containers (2), comprising the following steps:
a) conveying and rotating the containers;
b) respective full-circumference imaging of the containers from at least two different camera positions under different object angles (α1, α2) to image a circumferential area of the containers respectively in at least two views that differ with respect to the imaged rotational positon of the respective container, and
c) determining the position and/or rotational position of at least one feature (2a) of the surface (2b) of the container by way of computing image data of the feature in the at least two views.

10. Method according to claim 9, wherein in step c) image data of the at least two views are interpolated and/or added.

11. Method according to claim 9 or 10, wherein in step c) a virtual view of the container (2) is produced from the image data of the at least two views.

12. Method according to at least one of claims 9 to 11, wherein the at least two views have an overlapping image area (19) and are imaged substantially simultaneously.

13. Method according to at least one of claims 9 to 12, further comprising a step d) of determining an actual rotational position (8) of the containers (2) on the basis of the position determined in step c) and/or rotational position of the at least one feature (2a), and of determining a rotational position correction for approaching a desired rotational position (4) of the container.

14. Method according to claim 13, further comprising a step e) of approaching the desired rotational position (4).

15. Labeling method comprising the method according to claim 14 and a step of labeling the containers (2), wherein the approached desired rotational position (4) is a start position and/or reference position for labeling.

## Revendications

1. Dispositif pour assurer l'orientation de contenants (2), comprenant :
- des dispositifs de maintien rotatifs (3) destinés à maintenir et à faire tourner individuellement les contenants ;
- au moins deux caméras (7.1, 7.2) prévues le long d'un parcours de transport (5) pour les contenants, et destinées à représenter les contenants selon plusieurs vues, qui se distinguent quant à la position de rotation des contenants représentée ; et
- une unité de traitement de données (9) pour déterminer la position de caractéristiques sur la surface (2b) des contenants, au regard des vues relevées,
**caractérisé en ce que**
le dispositif est conçu pour une représentation respectivement totalement circonférentielle du contenant (2) sous différents angles d'objet (α1, α2), et l'unité de traitement de données est conçue de manière à déterminer la position et/ou la position de rotation d'au moins une caractéristique (2a) de la surface (2b) du contenant, moyennant traitement par calcul, de données d'image de la caractéristique dans au moins deux des vues.

2. Dispositif selon la revendication 1, dans lequel les caméras (7.1, 7.2) sont agencées de manière telle que des angles d'objet (α1, α2) se distinguent mutuellement, dans lesdites au moins deux vues de zones correspondantes de la caractéristique (2a), d'au moins 30°, notamment d'au moins 45°.

3. Dispositif selon la revendication 1 ou la revendication 2, dans lequel l'unité de traitement de données (9) est conçue de manière à pouvoir produire, à partir des données d'image desdites au moins deux vues, une vue virtuelle du contenant (2).

4. Dispositif selon l'une au moins des revendications précédentes, dans lequel les caméras (7.1, 7.2) présentent une zone d'image (19) de chevauchement le long du parcours de transport (5), en vue de représenter la caractéristiques (2a) dans la zone d'image de chevauchement sous différents angles d'objet (α1, α2).

5. Dispositif selon la revendication 4, dans lequel plusieurs zones d'image de chevauchement (19) sont prévues le long du parcours de transport (5), en vue de représenter le contenant (2) de manière totalement circonférentielle dans les zones d'image de chevauchement.

6. Dispositif selon l'une au moins des revendications précédentes, comprenant, par ailleurs, un dispositif d'éclairage (13) notamment orienté, pour éclairer les contenants (2) de manière à être en mesure de produire au niveau de la caractéristique (2a), dans lesdites au moins deux vues, des projections d'ombre et/ou des modèles de réflexion différents.

7. Dispositif selon l'une au moins des revendications précédentes, comprenant, par ailleurs, une unité de commande (11) pour orienter la position de rotation des contenants (2) au regard de la position et/ou de la position de rotation déterminée de la caractéristique (2a).

8. Machine d'étiquetage comprenant un dispositif selon l'une au moins des revendications précédentes.

9. Procédé pour assurer l'orientation de contenants (2), comprenant les étapes suivantes :
a) transport et rotation des contenants ;
b) représentation circonférentielle totale respective des contenants à partir d'au moins deux positions de caméra différentes sous des angles d'objet (α1, α2) différents, en vue de représenter une zone circonférentielle des contenants selon respectivement au moins deux vues, qui se distinguent quant à la position de rotation représentée du contenant respectivement considéré, ; et
c) détermination de la position et/ou de la position de rotation d'au moins une caractéristique (2a) de la surface (2b) du contenant, moyennant traitement par calcul, de données d'image de la caractéristique dans au moins deux vues.

10. Procédé selon la revendication 9, d'après lequel dans l'étape c), des données d'image d'au moins deux vues sont interpolées et/ou additionnées.

11. Procédé selon la revendication 9 ou la revendication 10, d'après lequel dans l'étape c), une vue virtuelle du contenant (2) est produite à partir des données d'image desdites au moins deux vues.

12. Procédé selon l'une au moins des revendications 9 à 11, d'après lequel lesdites au moins deux vues présentent une zone d'image de chevauchement (19) et sont représentées sensiblement de manière simultanée.

13. Procédé selon l'une au moins des revendications 9 à 12, comprenant, par ailleurs, une étape d) de détermination d'une position de rotation réelle (8) des contenants (2), au regard de la position et/ou de la position de rotation de ladite au moins une caractéristique (2a) déterminée dans l'étape c), et de détermination d'une correction de position de rotation pour aborder une position de rotation de consigne (4) du contenant.

14. Procédé selon la revendication 13, comprenant, par ailleurs, une étape e) permettant d'aborder la position de rotation de consigne (4).

15. Procédé d'étiquetage, qui comprend le procédé selon la revendication 14 ainsi qu'une étape d'étiquetage des contenants (2), la position de rotation de consigne (4) ayant été abordée constituant une position de départ et/ou une position de référence pour l'étiquetage.
